(19) Europäisches Patentamt
European Patent Office
Office européen des brevets

(11) **EP 3 637 364 A1**

(12) **EUROPÄISCHE PATENTANMELDUNG**

(43) Veröffentlichungstag:
**15.04.2020 Patentblatt 2020/16**

(51) Int Cl.:
***G06T 7/00*** *(2017.01)* ***G06T 7/11*** *(2017.01)*
***G06T 7/136*** *(2017.01)*

(21) Anmeldenummer: **18199400.5**

(22) Anmeldetag: **09.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder:
• **Bansmann, Martin**
  **51149 Köln (DE)**
• **Köktürk, Bülent**
  **51149 Köln (DE)**

(72) Erfinder:
• **Bansmann, Martin**
  **51149 Köln (DE)**
• **Köktürk, Bülent**
  **51149 Köln (DE)**

(74) Vertreter: **Marschall, Stefan**
  **Elbpatent**
  **Marschall & Partner PartGmbB**
  **Jessenstrasse 4**
  **22767 Hamburg (DE)**

Bemerkungen:
Geänderte Patentansprüche gemäss Regel 137(2) EPÜ.

(54) **VISUALISIERUNG EINER GEWEBEEIGENSCHAFT**

(57) Die vorliegende Erfindung betrifft eine Technik zum Visualisieren mindestens einer Gewebeeigenschaft in einem Organ (10). Dabei werden Pixel ($p_1$, $p_2$) in einem Untersuchungsbereich (12, 22, 32) eines digitalen Schichtbilds (1) des Organs klassifiziert. Auf Grundlage der Klassifikation wird wenigstens eine Ansicht (100) mindestens eines Teils des Organs erzeugt. Die Ansicht kann zudem auf Grundlage eines mittels eines weiteren bildgebenden Verfahrens erhaltenen Bildes (130) mindestens eines Teils des Organs erzeugt werden. Insbesondere kann dabei ein aus dem mindestens einen digitalen Schichtbild (1) generiertes dreidimensionales Flächenmodell (120) zumindest des Teils des Organs mit einem Bild (130) kombiniert werden, das mittels eines weiteren bildgebenden Verfahrens generiert wird oder wurde.

Fig. 2

EP 3 637 364 A1

**Beschreibung**

Die vorliegende Erfindung betrifft Verfahren, Vorrichtungen und Speichermedien, die jeweils dem automatischen oder teilautomatischen Visualisieren mindestens einer Gewebeeigenschaft dienen, die in einem Organ vorliegt.

Zur Analyse innerer Strukturen insbesondere bei lebenden Organismen, speziell beim Menschen, sind verschiedene bildgebende Verfahren bekannt. Diese können beispielsweise auf der Ausnutzung von Röntgenstrahlung, von Kernspinresonanz, elektrischer Impedanz, Ultraschall oder elektrischer Erregung beruhen. So können insbesondere zur Erkennung von Fibrose am Herzen zum Beispiel Schichtbilder vom schlagenden Herzen betrachtet oder mittels elektroanatomischen Mappings dreidimensionale Karten erzeugt und analysiert werden.

In den jeweiligen Ansichten können Experten Organe und Gewebestrukturen erkennen, beispielsweise um dann entscheiden zu können, ob krankhafte Anomalien vorliegen. Die Interpretation der Ansichten erfordert jedoch eine sehr große Erfahrung der involvierten Personen und ist gleichwohl fehleranfällig. Daher sind technische Hilfsmittel als Unterstützung von großem Nutzen.

Beispielsweise in der Schrift "Advanced Mapping Systems To Guide Atrial Fibrillation Ablation: Electrical Information That Matters" von S. Nedios, Ph. Sommer, A. Bollmann und G. Hindricks (in JAFIB Journal Review, Apr-May 2018, Volume 8, Issue 6) werden verschiedene Abbildungssysteme beschrieben, die auf der Visualisierung elektrophysiologischer, mittels diagnostischer Katheter gewonnener Informationen über das Herzatrium beruhen. Mit Hilfe der so generierten Abbildungen sollen insbesondere Eingriffe zur Ablation von Fibrosegewebe verbessert werden.

In der Druckschrift EP 2 784 748 A1 ist ein computerimplementiertes Verfahren zur Beurteilung von Gefäßnetzen anhand von medizinischen Bildern offenbart. Dazu wird aus der Bildinformation von Videosequenzen ein Graphenmodell erstellt, das ein Gefäßnetz repräsentiert und das dann analysiert wird.

Der vorliegenden Erfindung liegt die Aufgabe zugrunde, eine Technik bereitzustellen, die eine Visualisierung einer Gewebeeigenschaft wie beispielsweise einer Gewebestruktur in einem Organ verbessert und damit insbesondere eine Darstellung des Organs ermöglicht, die eine Interpretation vereinfacht.

Die Aufgabe wird gelöst durch ein Verfahren gemäß Anspruch 1, ein Verfahren gemäß Anspruch 6, eine Vorrichtung nach Anspruch 7, eine Vorrichtung nach Anspruch 11, ein Speichermedium gemäß Anspruch 12 und ein Speichermedium gemäß Anspruch 16. Vorteilhafte Ausführungsformen sind in den Unteransprüchen, der Beschreibung und den Figuren offenbart.

Die vorliegende Erfindung dient dazu, mindestens eine in einem Organ (also in mindestens einem Bereich des Organs) vorliegende Gewebeeigenschaft (z.B. eine Verhärtung, eine Aufweichung und/oder eine Einlagerung mindestens eines Stoffes) automatisch oder teilautomatisch (z.B. auf mindestens eine Eingabe hin) visualisieren zu können. Auf Grundlage mindestens einer Klassifikation von in mindestens einem digitalen Schichtbild des Organs enthaltenen Pixeln wird dabei jeweils wenigstens eine Ansicht mindestens eines Teils des Organs erzeugt. Die Klassifikation (also die Zuordnung von Pixeln zu Klassen) wird also jeweils für die Erzeugung der Ansicht/en verwendet und fließt damit in diese ein. Vorzugsweise erfolgt das Erzeugen der Ansicht/en und/oder das Klassifizieren (also die Klassifikation) automatisch oder teilautomatisch.

Die Ansicht/en ist/sind die vorzugsweise durch jeweilige Bilddaten gegeben. Vorzugsweise ist darin die mindestens eine Gewebeeigenschaft gekennzeichnet. Die Ansicht/en ermöglicht/ermöglichen gemäß der vorliegenden Erfindung somit eine automatische oder teilautomatische Visualisierung der Gewebeeigenschaft, insbesondere einer Gewebebeschaffenheit bzw. -struktur im Organ. Damit bietet die vorliegende Erfindung einem Anwender eine Hilfestellung bei der Interpretation erhaltener Bildinformation sowie bei deren weiterer Verwendung. Insbesondere ermöglichen die Varianten der vorliegenden Erfindung, bei denen die Ansicht(en) auch auf Grundlage eines mittels eines weiteren bildgebenden Verfahrens erhaltenen Bildes (mindestens eines Teils des Organs) erzeugt wird (z.B. durch Kombinieren, insbesondere Fusionieren der jeweiligen Bildinformationen), dass Informationen zur Anatomie des Teils des Organs und zur jeweiligen Gewebeeigenschaft (z.B. der Gewebebeschaffenheit bzw. -struktur) zusammengefasst werden können. So kann beispielsweise eine vorab (insbesondere vor einem medizinischen Eingriff) aus dem digitalen Schichtbild mittels der Klassifikation gewonnene Information über eine Gewebeeigenschaft gleichzeitig und an derselben Anzeigevorrichtung dargestellt werden wie Information, die während der Durchführung des weiteren bildgebenden Verfahrens erlangt wird. Speziell im Beispiel einer Gewebeablation kann insbesondere während einer mittels elektroanatomischen Mappings verfolgten Ablationsprozedur die aus den digitalen Schichtbildern gewonnene Information zur Gewebestruktur mit der elektroanatomisch gewonnenen Bildinformation verknüpft bzw. verschmolzen werden. Der ausführende Mediziner kann sich damit permanent die wichtige Information zur Gewebestruktur (z.B. zu einer vorliegenden Fibrose) in Korrelation mit elektroanatomischen Bilddaten in einem fusionierten dreidimensionalen Modell anzeigen lassen und damit den Eingriff optimieren.

Das digitale Schichtbild kann jeweils beispielsweise ein MRT-Schichtbild, ein CT-Schichtbild oder ein mittels elektrischer Impedanztomographie erstelltes Bild sein.

Ein erste erfindungsgemäße Verfahren umfasst insbesondere ein Festlegen eines Referenzbereiches in dem digitalen Schichtbild. Aus den Pixelwerten der im Referenzbereich angeordneten Pixel wird ein mittlerer Pixelwert (vorzugsweise automatisch oder teilautomatisch, z.B. auf mindestens eine Eingabe hin) bestimmt, der im folgenden als "Referenzmittelwert" bezeichnet wird. Je nach Art bzw. Kodierung des digitalen Schichtbildes und damit der Pixelwerte kann die Mittelung dabei über mindestens einen Intensitätswert des Pixels erfolgen. Ein derartiger Intensitätswert kann z.B. als Grauwert oder als Farbwert repräsentiert sein.

In dem digitalen Schichtbild wird gemäß dem ersten erfindungsgemäßen Verfahren ferner ein Untersuchungsbereich abgegrenzt. Darin enthaltene Pixel werden hinsichtlich einer jeweiligen Abweichung ihres jeweiligen Pixelwertes vom Referenzmittelwert klassifiziert, also jeweils einer Klasse zugeordnet. Der Klassifikation (also dem Klassifizieren) liegt somit ein Vergleich des jeweiligen Pixels im Untersuchungsbereich mit dem Referenzbereich (bzw. mit dem zugehörigen Referenzmittelwert) zugrunde. Damit spiegelt die Klassifikation automatisch oder teilautomatisch aus dem digitalen Schichtbild herzuleitende Gewebeeigenschaften, insbesondere eine jeweilige Gewebebeschaffenheit bzw. -struktur im jeweils vom Pixel dargestellten Punktbereich des Organs wider.

Dadurch, dass dem Referenzbereich und dem Untersuchungsbereich bei einem solchen Verfahren jeweils übereinstimmende äußere Bedingungen zugrunde liegen (insbesondere dieselben (jeweils aktuellen) Geräteeigenschaften bei der Aufnahme des Schichtbildes und dieselben individuellen Gewebecharakteristika des jeweiligen Körpers (beispielsweise eines Patienten)), können Fehlklassifikationen vermieden oder zumindest minimiert werden. Entsprechendes gilt für eine erste erfindungsgemäße Vorrichtung und ein erstes erfindungsgemäßes Speichermedium:

Eine erste erfindungsgemäße Vorrichtung dient einem Visualisieren mindestens einer Gewebeeigenschaft in einem Organ. Sie ist dazu eingerichtet, für einen Referenzbereich in einem digitalen Schichtbild des Organs (das also mindestens einen Teil des Organs zeigt) automatisch oder teilautomatisch (z.B. auf mindestens eine Eingabe hin) einen Referenzmittelwert als mittleren Pixelwert im Referenzbereich zu bestimmen. Der Referenzbereich kann als Datenauswahl aus das digitale Schichtbild bestimmenden Bilddaten vorbestimmt und/oder vom Anwender mittels eines Eingabemittels (das zur erfindungsgemäßen Vorrichtung gehören kann) festzulegen sein. Je nach Art bzw. Kodierung des digitalen Schichtbildes und damit der Pixelwerte kann die Mittelung zur Bestimmung des Referenzmittelwertes über mindestens einen Intensitätswert des Pixels erfolgen. Ein derartiger Intensitätswert kann z.B. als Grauwert oder als Farbwert repräsentiert sein.

Die erste erfindungsgemäße Vorrichtung ist weiterhin dazu eingerichtet, Pixel, die in einem Untersuchungsbereich im digitalen Schichtbild enthalten sind, automatisch oder teilautomatisch (z.B. auf mindestens eine Eingabe hin) hinsichtlich einer jeweiligen Abweichung ihres jeweiligen Pixelwertes vom Referenzmittelwert zu klassifizieren. Der Untersuchungsbereich kann als Auswahl aus das digitale Schichtbild bestimmenden Bilddaten vorbestimmt sein und/oder vom Anwender mittels eines Eingabemittels (das zur Vorrichtung gehören kann) abzugrenzen sein.

Schließlich ist die erste erfindungsgemäße Vorrichtung dazu eingerichtet, automatisch oder teilautomatisch (z.B. auf mindestens eine Eingabe hin) eine oder mehrere Ansicht/en mindestens eines Teils des Organs zu erzeugen. Für diese Ansicht bzw. wenigstens einer dieser Ansichten erfolgt das Erzeugen dabei auf Grundlage der Klassifikation.

Auf einem erfindungsgemäßen ersten Speichermedium sind Instruktionen gespeichert, die, wenn sie auf einer Rechnereinheit ausgeführt werden, bewirken, dass die Rechnereinheit für einen Referenzbereich in einem digitalen Schichtbild eines Organs automatisch oder teilautomatisch (z.B. auf mindestens eine Eingabe hin) einen Referenzmittelwert als mittleren Pixelwert im Referenzbereich bestimmt. Weiterhin bewirken die Instruktionen, dass die Rechnereinheit in einem Untersuchungsbereich im digitalen Schichtbild enthaltene Pixel automatisch oder teilautomatisch hinsichtlich einer jeweiligen Abweichung ihres jeweiligen Pixelwertes vom Referenzmittelwert klassifiziert. Schließlich bewirken die Instruktionen, dass die Rechnereinheit eine oder mehrere Ansicht/en mindestens eines Teils des Organs erzeugt, und zwar (im Falle mehrerer Ansichten für mindestens eine davon) auf Grundlage der Klassifikation. Die auf einem ersten erfindungsgemäßen Speichermedium gespeicherten Instruktionen machen also eine Rechnereinheit, die die Instruktionen ausführen kann, bzw. eine Vorrichtung, die solch eine Rechnereinheit umfasst, zu einer ersten erfindungsgemäßen Vorrichtung.

Gemäß einem zweiten erfindungsgemäßen Verfahren umfasst das Erzeugen der wenigstens einen Ansicht ein Kombinieren eines dreidimensionalen Flächenmodells zumindest des Teils des Organs mit einem Bild, das mittels eines weiteren bildgebenden Verfahren erzeugt wird oder wurde und den Teil des Organs darstellt; das Kombinieren kann dabei beispielsweise ein Überlagern oder ein Verarbeiten der zugehörigen Bildinformation zu neuer Bildinformation, insbesondere ein Fusionieren der jeweiligen Bildinformation umfassen. Das dreidimensionale Flächenmodell wird oder wurde dabei aus mindestens einem digitalen Schichtbild generiert. In der Ansicht bzw. in mindestens einer der Ansichten wird die (mindestens eine) Gewebeeigenschaft zumindest in dem Teil des Organs auf Grundlage einer Klassifikation von Pixeln im digitalen Schichtbild (bzw. in einem Untersuchungsbereich des digitalen Schichtbildes) gekennzeichnet. Vorzugsweise umfasst das Verfahren die Klassifikation (also ein Klassifizieren), die insbesondere automatisch oder teilautomatisch durchgeführt werden kann, beispielsweise auf Grundlage eines Referenzbereichs, eines zugehörigen Referenzmittelwertes und jeweiligen Abweichungen der Pixelwerte vom Referenzmittelwert wie in dieser Schrift beschrieben.

Analog ist eine zweite erfindungsgemäße Vorrichtung zum Visualisieren mindestens einer Gewebeeigenschaft in einem Organ dazu eingerichtet, eine oder mehrere Ansicht(en) zumindest eines Teils des Organs zu erzeugen. Dabei wird ein dreidimensionales Flächenmodell zumindest des Teils des Organs mit einem Bild, das mittels eines weiteren bildgebenden Verfahren erzeugt wird oder wurde und den Teil des Organs darstellt, kombiniert. Das Kombinieren kann dabei beispielsweise ein Überlagern oder ein Verarbeiten der zugehörigen Bildinformation zu neuer Bildinformation, insbesondere ein Fusionieren der jeweiligen Bildinformation umfassen. Das dreidimensionale Flächenmodell wird oder wurde dabei aus mindestens einem digitalen Schichtbild generiert. In der Ansicht bzw. in mindestens einer der Ansichten wird die (mindestens eine) Gewebeeigenschaft zumindest in dem Teil des Organs auf Grundlage einer Klassifikation von Pixeln im digitalen Schichtbild (bzw. in einem Untersuchungsbereich des digitalen Schichtbildes) gekennzeichnet. Vorzugsweise ist die Vorrichtung dazu eingerichtet, die Klassifikation (also ein Klassifizieren) automatisch oder teilautomatisch durchzuführen, beispielsweise auf Grundlage eines Referenzbereichs, eines zugehörigen Referenzmittelwertes und jeweiligen Abweichungen der Pixelwerte vom Referenzmittelwert wie in dieser Schrift beschrieben.

Ein zweites erfindungsgemäßes Speichermedium enthält darauf gespeicherten Instruktionen, die, wenn sie auf einer Rechnereinheit ausgeführt werden, bewirken, dass die Rechnereinheit eine oder mehrere Ansicht(en) zumindest eines Teils des Organs erzeugt, und zwar so, dass das Erzeugen ein Kombinieren eines dreidimensionales Flächenmodells zumindest des Teils des Organs mit einem Bild, das mittels eines weiteren bildgebenden Verfahren erzeugt wird oder wurde und den Teil des Organs darstellt, umfasst. Das Kombinieren kann dabei beispielsweise ein Überlagern oder ein Verarbeiten der zugehörigen Bildinformation zu neuer Bildinformation, insbesondere ein Fusionieren der jeweiligen Bildinformation umfassen. Das dreidimensionale Flächenmodell wird oder wurde dabei aus mindestens einem digitalen Schichtbild generiert. In der Ansicht bzw. in mindestens einer der Ansichten wird mindestens eine (mindestens eine) Gewebeeigenschaft zumindest in dem Teil des Organs auf Grundlage einer Klassifikation von Pixeln im digitalen Schichtbild (bzw. in einem Untersuchungsbereich des digitalen Schichtbildes) gekennzeichnet. Vorzugsweise bewirken die Instruktionen zudem, dass die Rechnereinheit die Klassifikation (also ein Klassifizieren) automatisch oder teilautomatisch durchzuführt, beispielsweise auf Grundlage eines Referenzbereichs, zugehörigen Referenzmittelwertes und Abweichung der Pixelwerte vom Referenzmittelwert wie in dieser Schrift beschrieben.

Die Ansicht/en ist/sind gemäß der vorliegenden Erfindung sind vorzugsweise durch jeweilige Bilddaten gegeben. Die erfindungsgemäßen Verfahren umfassen in vorteilhaften Ausführungsvarianten jeweils ein Anzeigen, also ein bildliches Darstellen der Ansicht bzw. mindestens einer der Ansichten mittels einer Anzeigevorrichtung. Die erfindungsgemäßen Vorrichtungen können vorzugsweise eine Anzeigevorrichtung umfassen und dazu eingerichtet sein, die Ansicht bzw. mindestens eine der Ansichten auf der Anzeigevorrichtung anzuzeigen (also bildlich darzustellen). Die erfindungsgemäßen Speichermedien enthalten analog vorzugsweise Instruktionen, die bewirken, dass Rechnereinheit eine Anzeigevorrichtung veranlasst, die Ansicht bzw. mindestens eine der Ansichten auf der Anzeigevorrichtung anzuzeigen.

Gemäß vorteilhaften Ausführungsformen sind die erfindungsgemäßen Vorrichtungen (durch entsprechende Komponenten der Vorrichtung sowie zugehörige Software) dazu eingerichtet, Eingaben eines Anwenders umfassende Schritte eines erfindungsgemäßen Verfahrens zu ermöglichen und die darauf beruhenden weiteren Schritte des Verfahrens automatisch vorzunehmen.

Vorzugsweise umfassen die erfindungsgemäßen Speichermedien weiterhin Instruktionen, die eine Eingabe von Daten und/oder Befehlen mittels eines Eingabemittels ermöglichen.

Gemäß vorteilhaften Ausführungsformen der vorliegenden Erfindung beruht eine dem Klassifizieren zugrundeliegende Klasseneinteilung (also die Definition der Klassen) auf ganzzahligen Vielfachen einer im Folgenden als "Referenzstandardabweichung" bezeichneten Standardabweichung der zu Pixeln im Referenzbereich gehörigen Pixelwerte in Bezug auf den Referenzmittelwert.

Ein (erstes oder zweites) erfindungsgemäßes Verfahren kann ein Bestimmen der Referenzstandardbweichung umfassen, analog kann eine (erste oder zweite) erfindungsgemäße Vorrichtung dazu eingerichtet sein, die Referenzstandardbweichung zu bestimmen, und/oder die in einem (ersen oder zweiten) erfindungsgemäßen Speichermedium enthaltenen Instruktionen können bewirken, dass die Rechnereinheit die Referenzstandardbweichung bestimmt.

Gemäß vorteilhaften Ausführungsformen der vorliegenden Erfindung können die zu den Ansicht(en) gehörigen Bilddaten vorzugsweise mindestens zum Teil insbesondere eine Kennzeichnung der Pixel (des Untersuchungsbereichs) gemäß der ihnen jeweils im Wege der Klassifikation zugeordneten Klasse umfassen. Die jeweilige Klasse kann als jeweilige Gewebeeigenschaft interpretiert werden. Insbesondere kann ein Kennzeichnen der mindestens eine Gewebeeigenschaft in einem vom jeweiligen Pixel dargestellten Punktbereich des Organs im Wege der Kennzeichnung gemäß der Klasse des Pixels erfolgen.

Insbesondere können die Pixel im Untersuchungsbereich jeweils eine klassenabhängige Farbkennung enthalten. In einer Darstellung der Ansicht auf einer Anzeigevorrichtung kann auf diese Weise die jeweilige Klasse und damit eine jeweilige Abweichung vom Referenzmittelwert sichtbar gemacht werden. Einem Anwender kann damit unmittelbar angezeigt werden, an welchen Stellen Gewebe hinsichtlich seiner Gewebeeigenschaft/en (wie beispielsweise seiner Beschaffenheit) in welchem Ausmaß von einem durch den Referenzmittelwert repräsentierten Normalwert abweicht.

Eine (erste oder zweite) erfindungsgemäße Vorrichtung kann insbesondere mindestens eine Rechnereinheit zum Bestimmen des Referenzbereichs, zum Klassifizieren der Pixel im Untersuchungsbereich und/oder zum Erzeugen der Ansicht/en umfassen. Eine derartige Rechnereinheit weist vorzugsweise eine Einrichtung zur Dateneinspeisung auf, mittels deren sie das mindestens eine Schichtbild während oder nach seiner Generierung als Datensatz oder -strom einlesen kann. Die Vorrichtung kann weiterhin vorzugsweise mindestens ein Eingabemittel umfassen, mittels dessen ein Anwender Befehle eingeben und/oder Auswahlen (z.B. von Punkten zur Bestimmung von Referenz- und/oder Untersuchungsbereich) treffen kann.

Der Untersuchungsbereich stellt vorzugsweise einen zu untersuchenden Teil des Organgewebes dar, in dem beispielsweise eine Anomalie vermutet wird und/oder an dem ein Eingriff vorgenommen werden soll. Insbesondere kann in dem Untersuchungsbereich eine vorbestimmte Funktionseinheit des Organs dargestellt sein. Eine solche Funktionseinheit kann das (ganze) Organ selbst sein oder ein Teil desselben, der eine bestimmte biologisch definierte Funktion hat, wie beispielsweise eine Atriumwand eines Herzens, der Pförtner eines Magens, ein Segment einer Leber oder Ähnliches. Gemäß einem speziellen Ausführungsbeispiel ist das Organ das Herz eines Patienten und der Untersuchungsbereich ein Bereich im Schichtbild, in dem mindestens ein Abschnitt einer Atriumwand, insbesondere einer Wand des linken Vorhofs dargestellt wird, der auf das Vorliegen einer Fibrose hin untersucht werden soll.

Gemäß vorteilhaften Ausführungsformen der vorliegenden Erfindung ist eine/die dem Klassifizieren zugrundeliegende Klasseneinteilung beispielsweise durch obere und untere Schranken für die (mit einem vorbestimmten $\alpha > 0$ skalierte und um ein vorbestimmtes $\beta \in \mathbb{R}$ verschobene) Abweichung $\alpha|p\text{-}M| + \beta$ der jeweiligen Pixelwerte p vom Referenzmittelwert M bestimmt, wobei die oberen und unteren Schranken jeweils auf ganzzahligen Vielfachen der Referenzstandardabweichung $\sigma$ beruhen.

Die obere und die untere Schranke definieren dabei zusammen also ein Intervall, das eine jeweilige Klasse bestimmt. Die für die Klasseneinteilung verwendeten Intervalle können dabei zueinander gleiche oder voneinander verschiedene Intervalllängen aufweisen. Für vorgegebene natürliche Zahlen $k_1$, $k_2$, ... $k_{m-1}$, $m \in \mathbb{N}$ kann beispielsweise ein Pixel im Untersuchungsbereich einer ersten Klasse $K_1$ zugeordnet werden, wenn für seinen Pixelwert p gilt $0 \leq \alpha|p\text{-}M| + \beta < k_1\sigma$ (wenn also $\alpha|p\text{-}M| + \beta \in [0, k_1\sigma[$gilt), es kann einer zweiten Klasse $K_2$ zugeordnet werden, wenn gilt $k_1\sigma \leq \alpha|p\text{-}M| + \beta < k_2\sigma$ (also $\alpha|p\text{-}M| + \beta \in [k_1\sigma, k_2\sigma[$), und so weiter bis zu einer m-ten Klasse $K_m$, der das Pixel zugeordnet werden kann, wenn gilt $k_{m-1}\sigma \leq \alpha|p\text{-}M| + \beta$ (wenn also $\alpha|p\text{-}M| + \beta \in [k_{m-1}\sigma, \infty[$gilt). Die Intervalle können alternativ mindestens teilweise jeweils an ihrem unteren Rand offen und (sofern endlich) an ihrem oberen Rand abgeschlossen sein.

Gemäß einem speziellen Ausführungsbeispiel wird jedes Pixel im Untersuchungsbereich je nach natürlicher Zahl $n \geq 1$ einer Klasse $K_n$ zugeordnet, wenn für einen Pixelwert p des Pixels gilt $(n-1)\sigma \leq \alpha|p\text{-}M| + \beta < n\sigma$.

Vorzugsweise umfasst ein (erstes oder zweites) erfindungsgemäßes Verfahren ein (durch einen Anwender erfolgendes) Auswählen einer von mehreren Klasseneinteilungen, so dass insbesondere eine Feinheit der Klassifikation gewählt werden kann. Eine (erste oder zweite) erfindungsgemäße Vorrichtung kann analog dazu eingerichtet sein, dem Anwender eine derartige Auswahl zu ermöglichen und das Klassifizieren entsprechend der Auswahl vorzunehmen. Die Instruktionen eines (ersten oder zweiten) erfindungsgemäßen Speichermediums können analog bewirken, dass eine Vorrichtung einem Anwender eine derartige Auswahlmöglichkeit bietet und dass die Rechnereinheit das Klassifizieren entsprechend in Abhängigkeit von einer Auswahl vornimmt.

Alternativ oder zusätzlich kann ein (erstes oder zweites) erfindungsgemäßes Verfahren ein (durch einen Anwender erfolgendes) Auswählen umfassen, ob eine oder mehrere Ansicht(en) erzeugt werden sollen und/oder welcher Art die Ansicht(en) sein soll(en), beispielsweise als Bilddaten einer zweidimensionalen, einer dreidimensionalen, einer in Grautönen erzeugten Darstellung und/oder einer Darstellung, die eine vorzugebende Anzahl an Farben aufweist. Eine (erste oder zweite) erfindungsgemäße Vorrichtung kann analog dazu eingerichtet sein, dem Anwender mindestens eine derartige Auswahl zu ermöglichen und die Ansicht/en entsprechend der Auswahl zu erzeugen. Die Instruktionen eines (erstes oder zweites) erfindungsgemäßen Speichermediums können bewirken, dass eine Vorrichtung einem Anwender eine derartige Auswahl ermöglicht und dass die Rechnereinheit die Ansicht(en) gemäß einer Auswahl erzeugt.

Auf diese Weise kann/können die Ansichten an den jeweiligen Bedarf des Anwenders angepasst werden.

Der Referenzbereich und/oder der Untersuchungsbereich kann (jeweils) durch zwei oder mehr voneinander im Schichtbild getrennte Begrenzungskurven begrenzt sein; diese können beispielsweise zwei einander gegenüberliegende Abschnitte einer Wand darstellen (wie insbesondere einer Wand eines hohlen Organs oder einer hohlen Einheit des Organs, speziell einer Wand eines Herzatriums).

Das Festlegen des Referenzbereichs und/oder das Abgrenzen des Untersuchungsbereichs kann automatisch geschehen (z.B. durch eine automatische Kantenfindung mittels Auswertung von Pixelwerten) oder teilweise automatisch erfolgen (z.B. unter Einschluss zumindest einer manuellen Eingabe durch mindestens einen Anwender mittels wenigstens eines Eingabemittels). Insbesondere kann das Festlegen bzw. Abgrenzen ein Kennzeichnen einer Mehrzahl an Punkten (also Pixeln) in dem digitalen Schichtbild durch einen (oder mehrere) Anwender sowie ein automatisch erfolgendes Berechnen (z.B. mittels Interpolation oder Ausgleichsrechnung) mindestens einer Begrenzungskurve des Referenz- bzw. des Untersuchungsbereichs aus den gekennzeichneten Punkten umfassen. Gekennzeichnete Punkte können beispielsweise automatisch durch einen Polygonzug miteinander verbunden werden, der dann eine Begrenzungskurve bilden kann. Wird der jeweilige Bereich durch mehrere voneinander getrennte Begrenzungskurven begrenzt wie oben erwähnt, können zunächst zu einer ersten Begrenzungskurve gehörige Punkte gekennzeichnet werden, was beispielsweise durch eine entsprechende Eingabe des Anwenders abgeschlossen werden kann. Danach (ggf. auch erst nach einem Berechnen, möglicherweise auch Darstellen einer zugehörigen ersten Begrenzungskurve) können zu einer zweiten Begrenzungskurve gehörige Punkte vom Anwender gekennzeichnet werden (was wiederum durch eine entsprechende Eingabe des Anwenders abgeschlossen werden kann).

Vorzugsweise umfasst der Referenzbereich eine Darstellung mutmaßlich gesunden Gewebes.

Gemäß einer vorteilhaften Ausführungsform umfasst ein (erstes oder zweites) erfindungsgemäßes Verfahren eine analoge Wiederholung einiger oder aller der in Bezug auf das digitale Schichtbild vorgenommenen Schritte für mindestens ein "zweites" bzw. weiteres digitales Schichtbild vom Organ (das also ebenfalls mindestens einen Bereich des Organs darstellt); das zuvor genannte digitale Schichtbild ist in diesem Sinne ein "erstes" Schichtbild, der Referenzbereich ein "erster" Referenzbereich mit zugehörigem "erstem" Referenzmittelwert und "erster" Referenzstandardabweichung, der Untersuchungsbereich im ersten Schichtbild ein "erster" Untersuchungsbereich und die Klassifikation (also die durch das Klassifizieren vorgenommenen Zuordnung von Pixeln des ersten Untersuchungsbereichs zu Klassen) eine "erste Klassifikation".

Zum Klassifizieren von Pixeln eines zugehörigen zweiten bzw. weiteren Untersuchungsbereichs (als Bereich des mindestens einen zweiten bzw. weiteren digitalen Schichtbilds) kann der erste Referenzmittelwert wiederverwendet werden, und Entsprechendes gilt für die erste Referenzstandardabweichung (für diese Fälle wird in dieser Schrift das Attribut "zweiter" verwendet), oder es kann im mindestens einen weiteren digitalen Schichtbild analog ein "weiterer" Referenzbereich festgelegt sowie ein zugehöriger "weiterer" Referenzmittelwert, möglicherweise auch eine "weitere" Referenzstandardabweichung bestimmt und zum Klassifizieren verwendet werden.

Insbesondere kann das Verfahren also ein Abgrenzen eines jeweiligen zweiten Untersuchungsbereichs in mindestens einem zweiten digitalen Schichtbild vom Organ sowie ein Klassifizieren von Pixeln des zweiten Untersuchungsbereichs gemäß einer jeweiligen Abweichung ihres jeweiligen Pixelwertes vom (ersten) Referenzmittelwert umfassen. Dabei kann dieselbe Klasseneinteilung wie bei der Klassifikation der Pixel des ersten Untersuchungsbereichs verwendet werden oder eine andere Klasseneinteilung. Vorzugsweise wird die Ansicht bzw. mindestens eine der Ansichten bei derartigen Ausführungsformen auf Grundlage der zweiten Klassifikation (also der Klassifikation der Pixel des mindestens einen zweiten Untersuchungsbereichs im mindestens einen zweiten digitalen Schichtbild) erzeugt; insbesondere kann also die Ansicht bzw. mindestesn eine der Ansichten auf Grundlage sowohl der ersten als auch der zweiten Klassifikation erzeugt werden, oder es können mehrere Ansichten erzeugt werden, von denen mindestens eine auf der ersten und mindestens eine auf der zweiten Klassifikation beruht.

Alternativ oder zusätzlich kann ein erfindungsgemäßes Verfahren ein Festlegen eines jeweiligen weiteren Referenzbereiches in mindestens einem weiteren digitalen Schichtbild vom Organ und ein (vorzugsweise automatisch oder teilautomatisch (z.B. auf mindestens eine Eingabe hin) erfolgendes) Bestimmen eines weiteren Referenzmittelwertes als mittleren Pixelwert im weiteren Referenzbereich umfassen. Diese weiteren Werte können dann in das Erzeugen der Ansicht oder mindestens einer der Ansichten einfließen:

In dem mindestens einen weiteren digitalen Schichtbild kann dazu ein jeweiliger weiterer Untersuchungsbereich abgegrenzt werden, und darin enthaltene Pixel können gemäß einer jeweiligen Abweichung ihres jeweiligen Pixelwertes vom weiteren Referenzmittelwert klassifiziert werden. Vorzugsweise beruht dabei eine (weitere) Klasseneinteilung auf ganzzahligen Vielfachen einer weiteren Referenzstandardabweichung (als Standardabweichung von Pixelwerten des weiteren Referenzbereichs von dem weiteren Referenzmittelwert); das Verfahren kann ein Bestimmen der weiteren Referenzstandardabweichung umfassen.

Auf Grundlage der weiteren Klassifikation (also der Klassifikation der Pixel des mindestens einen weiteren Untersuchungsbereichs im mindestens einen weiteren digitalen Schichtbild) kann dann die Ansicht bzw. mindestens eine der Ansichten erzeugt werden. Insbesondere kann also die Ansicht bzw. eine der Ansichten auf Grundlage sowohl der ersten als auch der weiteren Klassifikation erzeugt werden, oder es können mehrere Ansichten erzeugt werden, von denen mindestens eine auf der ersten und mindestens eine auf der weiteren Klassifikation beruht.

Eine (erste oder zweite) erfindungsgemäße Vorrichtung kann analog dazu eingerichtet sein, Pixel, die in einem jeweiligen zweiten und/oder einem jeweiligen weiteren, in mindestens einem zweiten bzw. weiteren digitalen Schichtbild vom Organ abgegrenzten Untersuchungsbereich enthalten sind, automatisch oder teilautomatisch gemäß einer jeweiligen Abweichung ihres jeweiligen Pixelwertes vom Referenzmittelwert bzw. von einem weiteren Referenzmittelwert zu klassifizieren. Dabei kann die durch den ersten Referenzmittelwert (und ggf. durch die erste Referenzstandardabweichung) bestimmte Klasseneinteilung oder eine weitere Klasseneinteilung verwendet werden; im letzteren Fall beruht die (weitere) Klasseneinteilung vorzugsweise auf ganzzahligen Vielfachen einer weiteren Referenzstandardabweichung (als Standardabweichung von Pixelwerten des weiteren Referenzbereichs vom weiteren Referenzmittelwert). Die Ansicht bzw. mindestens eine der Ansichten, die zu erzeugen die Vorrichtung eingerichtet ist, wird vorzugsweise auf Grundlage der klassifizierten Pixel des zweiten bzw. weiteren Untersuchungsbereichs im mindestens einen zweiten bzw. weiteren digitalen Schichtbild erzeugt. Letzteres kann von demselben digitalen Bildtyp sein wie das erste digitale Schichtbild oder von einem anderen Bildtyp.

Entsprechend bewirken die auf einem erfindungsgemäßen Speichermedium gespeicherten Instruktionen vorzugsweise die genannten Schritte, wenn sie auf einer (bzw. der) Rechnereinheit ausgeführt werden.

In Ausführungsformen der vorliegenden Erfindung, bei denen wie beschrieben mindestens ein zweiter und/oder mindestens ein weiterer Untersuchungsbereich in mindestens einem zweiten bzw. weiteren Schichtbild herangezogen wird, wird in diesem zweiten bzw. weiteren Untersuchungsbereich vorzugsweise dieselbe vorbestimmte Funktionseinheit des Organs dargestellt wie im ersten Untersuchungsbereich. Insbesondere verläuft mindestens eine jeweilige Begrenzungskurve des ersten und des zweiten bzw. weiteren Untersuchungsbereichs vorzugsweise jeweils im Wesentlichen entlang einem Rand der dargestellten Funktionseinheit, die beispielsweise eine Atriumwand eines Herzens, der Pförtner eines Magens, ein Segment einer Leber oder Ähnliches sein kann.

Der erste und der zweite bzw. und der weitere Untersuchungsbereich haben dann also eine gemeinsame biologische Bedeutung, ihr Vergleich miteinander und/oder eine auf beiden Klassifikationen beruhende Ansicht sind/ist daher besonders aussagekräftig.

Für das Abgrenzen des zweiten bzw. des weiteren Untersuchungsbereich, das Festlegen des weiteren Referenzbereichs, das Bestimmen des weiteren Referenzmittelwertes (insbesondere für die Mittelung) und die Klasseneinteilung gilt analog das zum ersten Untersuchungsbereich, ersten Referenzbereich, ersten Referenzmittelwert bzw. zur ersten Klasseneinteilung Erwähnte.

Das mindestens eine zweite bzw. das mindestens eine weitere Schichtbild kann von demselben oder einem anderen digitalen Bildtyp sein wie/ als das erste. Spezielle jeweils mögliche digitale Bildtypen sind z.B. MRT-Bilder, CT-Bilder und mittels elektrischer Impedanztomographie erstellte Bilder. Gemäß vorteilhaften Ausführungsformen der vorliegenden Erfindung umfasst die Ansicht bzw. wenigstens eine der Ansichten ein dreidimensionales Flächenmodell mindestens eines Teils des Organs. Das Flächenmodell weist dabei vorzugweise Oberflächensegmente auf, die auf Grundlage der Klassifikation (der Pixel im Untersuchungsbereich) gekennzeichnet, beispielsweise eingefärbt sind. Vorzugsweise ist das dreidimensionale Flächenmodell digital durch entsprechende Oberflächenpunkte gegeben. Die Oberflächensegmente können dabei jeweils mehrere Oberflächenpunkte umfassen oder aus einzelnen Oberflächenpunkten bestehen.

Insbesondere können Randpixel des (im Schichtbild zweidimensionalen) Untersuchungsbereichs, die also auf einer Begrenzungskurve des Untersuchungsbereichs liegen, in jeweilige Oberflächensegmente des dreidimensionalen Flächenmodells eingebettet sein. Die Oberflächensegmente können dann auf Grundlage der Klassifikation der Randpixel gekennzeichnet sein.

In Ausführungsformen, bei denen - wie oben beschrieben - ein zweites und/oder ein weiteres Klassifizieren erfolgt bzw. bei denen die Vorrichtung entsprechend eingerichtet ist, ein zweites und/oder ein weiteres Klassifizieren vorzunehmen, können die genannten Oberflächensegmente zusätzlich auf Grundlage der entsprechenden zweiten bzw. weiteren Klassifikation gekennzeichnet sein, und/oder das Flächenmodell kann zweite bzw. weitere Oberflächensegmente umfassen, die auf Grundlage der zweiten bzw. weiteren Klassifikation gekennzeichnet sind.

In Ausführungsvarianten, bei denen im Untersuchungsbereich (bzw. - in entsprechenden Ausführungsformen - im ersten, zweiten und/oder weiteren Untersuchungsbereich) eine vorbestimmte Funktionseinheit dargestellt wird, kann der besagte Teil des Organs (von dem die Ansicht ein Flächenmodell umfasst) beispielsweise diese Funktionseinheit sein. Auf diese Weise können die äußere Gestalt der Funktionseinheit geometrisch modelliert und zudem Gewebeeigenschaften, insbesondere eine Beschaffenheit von unter der modellierten Oberfläche liegendem Gewebe gekennzeichnet, vorzugsweise bildlich (an einer Anzeigevorrichtung) dargestellt werden. Ein Anwender kann aus einer derartigen Darstellung dann sowohl die äußere Gestalt als auch innere Gewebemerkmale erkennen und so leichter ggf. vorhandene Anomalien identifizieren.

Gemäß einer vorteilhaften Ausführungsvariante der vorliegenden Erfindung wird die Ansicht bzw. mindestens eine der Ansichten auch auf Grundlage mindestens eines Bildes von zumindest einem/dem Teil des Organs erzeugt, das mittels eines weiteren bildgebenden Verfahrens erzeugt wurde oder (während des Erzeugens) wird. Auf diese Weise können Informationen, die aus dem mindestens einen Schichtbild (sowie ggf. aus mindestens einem zweiten und/oder mindestens einem weiteren Schichtbild) gewonnen werden, mit Informationen kombiniert werden, die das mittels eines weiteren bildgebenden Verfahren erhaltene Bild bereitstellt. Dieses kann beispielsweise ein mittels elektrischer Impedanztomographie, mittels Röntgen, Magnetresonanztomographie und/oder mittels elektroanatomischem Mapping erhaltenes Bild sein. Es kann insbesondere eine dreidimensionale Darstellung mindestens eines Bereichs des Organs umfassen.

Die Ansicht kann bei derartigen Ausführungsformen beispielsweise eine Überlagerung des mittels eines weiteren bildgebenden Verfahren erhaltenen Bildes mit dem Schichtbild und/oder - in entsprechenden Ausführungsformen - mit den Schichtbildern umfassen, in dem/denen die Klassifikationen visuell kenntlich gemacht sein können.

Gemäß einer bevorzugten Ausführungsvariante umfasst die Ansicht Bildinformation des mittels eines weiteren bildgebenden Verfahren erhaltenen Bildes, die in ein dreidimensionales Flächenmodell zumindest eines Teils des Organs importiert ist, beispielsweise in Form einer Kombination (insbesondere Überlagerung/ Fusion) des genannten Bildes mit dem dreidimensionalen Oberflächenmodell. Oberflächensegmente dieses kombinierten (z.B. überlagerten bzw. fusionierten) Oberflächenmodells können dabei auf Grundlage der Klassifikation bzw. (in entsprechenden Ausführungsformen) der mehreren Klassifikationen gekennzeichnet (beispielsweise eingefärbt) sein.

Mit derartigen Ausführungsformen können Schwächen in der jeweiligen Technik der Bildgewinnung ausgeglichen bzw. Synergieeffekte erzeugt werden, und/oder es können während einer Aufnahme, ggf. sogar während einer Behandlung mittels eines ersten bildgebenden Verfahrens erfasste Bilddaten mit vorab mittels eines anderen bildgebenden Verfahrens aufgenommenen Informationen zusammengeführt werden.

Gemäß einem speziellen Ausführungsbeispiel sind die Schichtbilder MRT- Schichtbilder und ist das weitere bildgebende Verfahren ein elektroanalytisches Mapping. Die Gewebeeigenschaft kann insbesondere das Vorliegen einer Fibrose im Gewebe sein.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:

Figur 1a: ein exemplarisches digitales Schichtbild nach Kennzeichnung eines Referenzbereichs und Abgrenzung eines Untersuchungsbereichs;

Figur 1b: das Schichtbild der Figur 1a mit klassifizierten Pixeln des Untersuchungsbereichs;

Figur 2: eine bildliche Darstellung einer Ansicht, wie sie gemäß einem ersten oder zweiten erfindungsgemäßen Verfahren erzeugt werden könnte; und

Figur 3: eine erfindungsgemäße Vorrichtung gemäß einer exemplarischen Ausführungsform der vorliegenden Erfindung.

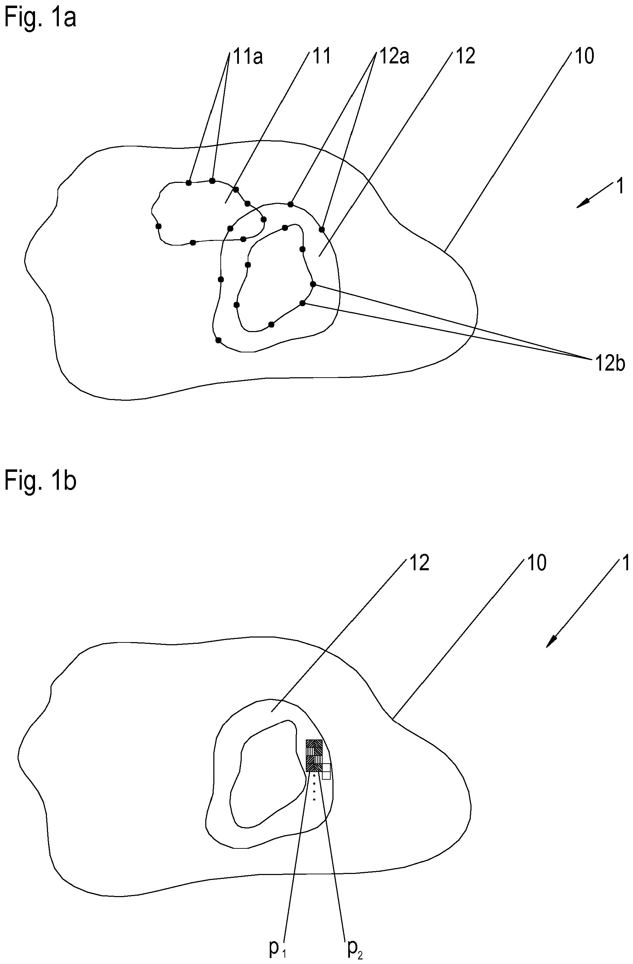

In den Figuren 1a, 1b ist zur Erläuterung eines erfindungsgemäßen Verfahrens ein digitales Schichtbild 1 dargestellt, in dem unterschiedliche Verfahrensschritte illustriert sind: In Figur 1a ist dabei in dem Schichtbild 1, das ein Organ 10 zeigt, ein Referenzbereich 11 festgelegt worden, indem (mittels eines geeigneten Eingabemittels) von einem Anwender Punkte 11a festgelegt wurden, aus denen dann automatisch eine den Referenzbereich berandende und damit definierende Kurve bestimmt wurde; im vorliegenden Fall verläuft die Kurve durch die Punkte 11a. Vorzugsweise wurden die Punkte 11a dabei so ausgewählt, dass im Referenzbereich 11 des Schichtbildes 1 mutmaßlich gesundes Gewebe des Organs 10 dargestellt ist.

Das Schichtbild 1 zeigt zudem einen Untersuchungsbereich 12, der vom Anwender durch Auswahl von inneren und äußeren Begrenzungspunkten 12a, 12b sowie durch eine automatische Bestimmung einer äußeren und einer inneren, den Untersuchungsbereich 12 jeweils begrenzenden Kurve (die vorliegend durch die inneren bzw. äußeren Begrenzungspunkte 12a bzw. 12b verläuft) abgegrenzt worden. Gemäß einer vorteilhaften Ausführungsform wird in dem Untersuchungsbereich 12 eine vorbestimmte, biologisch definierte Funktionseinheit des Organs 10 (in der Schicht, die im Schichtbild 1 gezeigt ist) dargestellt.

In Figur 1b sind symbolisch einige Pixel im Untersuchungsbereich 12 gezeigt, von denen aus Übersichtlichkeitsgründen nur die Pixel $p_1$ und $p_2$ bezeichnet sind. Wie in der Figur durch unterschiedliche Schraffierungen angedeutet, wurden die Pixel gemäß einer jeweiligen Abweichung ihres Pixelwertes vom Referenzmittelwert klassifiziert, also jeweiligen Klassen zugeordnet. Basis für die Einteilung bzw. Definition der Klassen sind somit die Pixelwerte der Pixel im Referenzbereich. Vorzugsweise beruht die Klasseneinteilung auf ganzzahligen Vielfachen der Referenzstandardabweichung (d.h. der Standardabweichung der Pixelwerte im Referenzbereich 11 (siehe Figur 1a) vom Referenzmittelwert).

Auf Grundlage der somit vorgenommenen Klassifikation wird gemäß der vorliegenden Erfindung mindestens eine Ansicht mindestens eines Teils des Organs 10 erzeugt. Vorzugsweise ist die mindestens eine Ansicht durch Bilddaten gegeben.

Erfindungsgemäß fließt somit in die Ansicht Information ein, die durch die Klassifikation gegeben ist, die im gezeigten Fall ihrerseits auf dem Referenzbereich beruht. Dies ermöglicht eine Visualisierung einer Gewebeeigenschaft im Organ, insbesondere im Untersuchungsbereich, so dass dem Anwender eine Hilfestellung zur Interpretation des Schichtbildes gegeben wird.

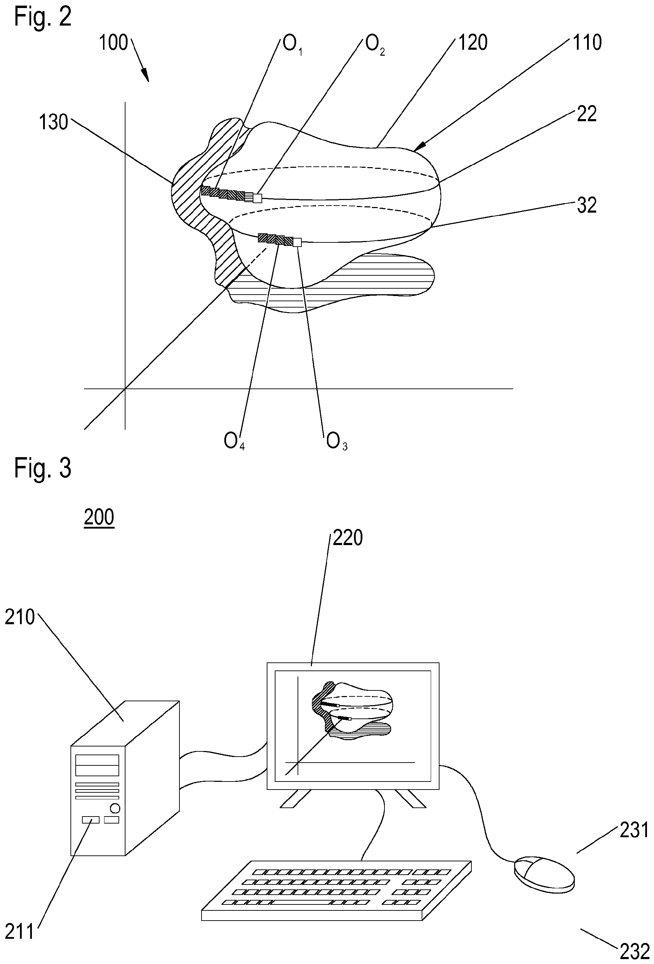

In Figur 2 ist exemplarisch eine bildliche Darstellung einer Ansicht 100 mindestens eines Teils eines Organs gezeigt, wie sie gemäß einem ersten oder zweiten erfindungsgemäßen Verfahren erzeugt werden könnte. Im vorliegenden Fall ist der genannte Teil eine Funktionseinheit 110 des (im Ganzen nicht gezeigten) Organs, alternativ könnte er beispielsweise auch das ganze Organ umfassen.

Die Ansicht 100 umfasst ein dreidimensionales Flächenmodell 120 der Funktionseinheit 110, das aus einer Mehrzahl an (in der Figur 2 nicht gezeigten) Schichtbildern generiert wurde. In diesen wurde dazu vorzugsweise jeweils ein die Funktionseinheit 110 (in der jeweiligen Schicht) darstellender Untersuchungsbereich abgegrenzt; in der Figur 2 sind exemplarisch die zugehörigen Untersuchungsbereiche als erster Untersuchungsbereich 22 und als zweiter oder weiterer Untersuchungsbereich 32 bezeichnet. Die Untersuchungsbereiche sind als jeweilige Schichten der Funktionseinheit 110 in das dreidimensionale Flächenmodell 120 eingebettet.

Die Pixel in den jeweiligen Untersuchungsbereichen 22, 32 wurden ferner klassifiziert, beispielsweise wie oben beschrieben; wie oben erwähnt kann eine dabei verwendete Klasseneinteilung auf demselben Referenzbereich (der in einem der Schichtbilder festgelegt worden sein kann), ggf. auch der zugehörigen Referenzstandardabweichung beruhen oder auf verschiedenen, in unterschiedlichen Schichtbildern festgelegten Referenzbereichen (sowie ggf. auch den zugehörigen Referenzstandardabweichungen).

Das dreidimensionale Flächenmodell 120 weist eine Vielzahl an Oberflächensegmenten auf, von denen in der Figur aus Gründen der Übersichtlichkeit und Erkennbarkeit nur einige symbolisch vergrößert explizit dargestellt und davon nur die Oberflächensegmente $O_1$, $O_2$, $O_3$, $O_4$ bezeichnet sind.

Die Oberflächensegmente sind dabei auf Grundlage der Klassifikationen der Pixel in den Untersuchungsbereichen der Schichtbilder gekennzeichnet; dies ist in der Figur 2 durch jeweilige Schraffierungen angedeutet. Insbesondere können die an der Begrenzung des Untersuchungsbereichs 22 angeordneten Oberflächensegmente $O_1$, $O_2$ (usw.) beispielsweise entsprechend einer Klasse der zugehörigen Pixel im jeweiligen Schichtbild gekennzeichnet sein; Entsprechendes gilt für die an der Begrenzung des Untersuchungsbereichs 32 angeordneten Oberflächensegmente $O_3$, $O_4$ (usw.). Die jeweilige Klasse kann als jeweilige Gewebeeigenschaft interpretiert werden. Diese Kennzeichnung gemäß der Klasse des Pixels kann also als Kennzeichnung der mindestens eine Gewebeeigenschaft im vom jeweiligen Pixel dargestellten Punktbereich des Organs dienen.

Die in der Figur 2 bildlich dargestellte Ansicht 100 umfasst weiterhin ein Bild 130 der Funktionseinheit 110 des Organs, das mittels eines weiteren bildgebenden Verfahrens erhalten wurde. Auf diese Weise können die Ergebnisse nacheinander durchgeführter Bildaufnahmen zusammengeführt werden, insbesondere können sogar Prozesse während des Erstellens einer Bildaufnahme auf Grundlage einer oder mehrerer früherer Aufnahme/n gesteuert bzw. optimiert werden.

In der Figur 3 ist exemplarisch eine erfindungsgemäße Vorrichtung 200 in Form einer entsprechend programmierten Rechnereinheit 210 mit angeschlossener Anzeigevorrichtung 220 sowie angeschlossenen Eingabemitteln 231 und 232 dargestellt. Mittels einer Datenschnittstelle 211 (z.B. in Form eines USB-Anschlusses) können dem Rechner 210 digitale Schichtbilder zugeführt werden. Diese können dann jeweils an der Anzeigevorrichtung 220 angezeigt werden.

Die Rechnereinheit ist dazu eingerichtet, für jeweilige digitale Schichtbilder über die Eingabemittel 231, 232 jeweilige Auswahlen von Punkten von einem (oder mehreren) Anwender(n) zu empfangen sowie daraus den Referenz- und/oder Untersuchungsbereich festzulegen bzw. abzugrenzen.

Damit kann die Rechnereinheit dann wie oben beschrieben einen Referenzmittelwert und vorzugsweise eine Referenzstandardabweichung bestimmen, im Untersuchungsbereich enthaltene Pixel klassifizieren und eine oder mehrere Ansichten mindestens eines Teils des Organs auf Grundlage der Klassifikation erzeugen. Auf der Anzeigevorrichtung 220 kann im dargestellten Ausführungsbeispiel die Ansicht bzw. mindestens eine der Ansichten bildlich dargestellt werden.

Die vorliegende Erfindung betrifft eine Technik zum Visualisieren mindestens einer Gewebeeigenschaft in einem Organ 10. Dabei werden Pixel $p_1$, $p_2$ in einem Untersuchungsbereich 12, 22, 32 eines digitalen Schichtbilds 1 des Organs klassifiziert. Auf Grundlage der Klassifikation wird wenigstens eine Ansicht 100 mindestens eines Teils des Organs erzeugt. Die Ansicht kann zudem auf Grundlage eines mittels eines weiteren bildgebenden Verfahrens erhaltenen Bildes 130 mindestens eines Teils des Organs erzeugt werden. Insbesondere kann dabei ein aus dem mindestens einen digitalen Schichtbild 1 generiertes dreidimensionales Flächenmodell 120 zumindest des Teils des Organs mit einem Bild 130 kombiniert werden, das mittels eines weiteren bildgebenden Verfahrens generiert wird oder wurde.

Bezugszeichen

1 Schichtbild

10 Organ
11 Referenzbereich
11a Punkte zur Festlegung des Referenzbereichs 11

12, 22, 32     Untersuchungsbereich
12a, 12b     Begrenzungspunkt zur Abgrenzung des Untersuchungsbereichs 12

100     Ansicht
110     Funktionseinheit eines Organs
120     dreidimensionales Flächenmodell
130     mittels eines weiteren bildgebenden Verfahrens erhaltenes Bild

200     erfindungsgemäße Vorrichtung
210     Rechnereinheit
211     Datenschnittstelle
220     Anzeigevorrichtung
231, 232     Eingabemittel

$O_1, O_2, O_3, O_4$     Oberflächensegmente
$p_1, p_2$     Pixel

**Patentansprüche**

1. Verfahren zum Visualisieren mindestens einer in einem Organ (10) vorliegenden Gewebeeigenschaft, wobei das Verfahren umfasst:

   - Festlegen eines Referenzbereiches (11) in einem digitalen Schichtbild (1) des Organs;
   - Bestimmen eines Referenzmittelwertes als mittleren Pixelwert im Referenzbereich (11);
   - Abgrenzen eines Untersuchungsbereichs (12, 22, 32) in dem digitalen Schichtbild (1);
   - Klassifizieren von Pixeln des Untersuchungsbereichs gemäß einer jeweiligen Abweichung ihres jeweiligen Pixelwertes vom Referenzmittelwert; und
   - Erzeugen einer oder mehrerer Ansicht/en (100) mindestens eines Teils des Organs, wobei die Ansicht bzw. mindestens eine der Ansichten auf Grundlage der Klassifikation erzeugt wird.

2. Verfahren nach Anspruch 1,

   - wobei die Ansicht bzw. mindestens eine der Ansichten auch auf Grundlage eines mittels eines weiteren bildgebenden Verfahrens erhaltenen Bildes (130) mindestens eines Teils des Organs erzeugt wird; und/oder
   - wobei die Ansicht bzw. mindestens eine der Ansichten ein dreidimensionales Flächenmodell (120) mindestens eines Teils des Organs umfasst, wobei das dreidimensionale Flächenmodell auf Grundlage der Klassifikation gekennzeichnete Oberflächensegmente ($O_1, O_2, O_3, O_4$) aufweist.

3. Verfahren gemäß einem der Ansprüche 1 oder 2, wobei eine beim Klassifizieren verwendete Klasseneinteilung auf ganzzahligen Vielfachen einer Referenzstandardabweichung als Standardabweichung von Pixelwerten des Referenzbereichs (11) vom Referenzmittelwert beruht.

4. Verfahren gemäß einem der vorhergehenden Ansprüche, das zudem umfasst:

   - Abgrenzen eines zweiten Untersuchungsbereichs (12, 22, 32) in mindestens einem zweiten digitalen Schichtbild des Organs; und
   - Klassifizieren von Pixeln des zweiten Untersuchungsbereichs gemäß einer jeweiligen Abweichung ihres jeweiligen Pixelwertes vom Referenzmittelwert;

   wobei die Ansicht bzw. mindestens eine der Ansichten auf Grundlage der Klassifikation der Pixel des zweiten Untersuchungsbereichs im mindestens einen zweiten digitalen Schichtbild erzeugt wird.

5. Verfahren gemäß einem der vorhergehenden Ansprüche, das zudem umfasst:

   - Festlegen eines weiteren Referenzbereiches in mindestens einem weiteren digitalen Schichtbild des Organs;
   - Bestimmen eines weiteren Referenzmittelwertes als mittleren Pixelwert im weiteren Referenzbereich;
   - Abgrenzen eines jeweiligen weiteren Untersuchungsbereichs in dem mindestens einen weiteren digitalen Schichtbild; und
   - Klassifizieren von Pixeln des weiteren Untersuchungsbereichs gemäß einer jeweiligen Abweichung ihres jeweiligen Pixelwertes vom weiteren Referenzmittelwert;

   wobei die Ansicht bzw. mindestens eine der Ansichten auf Grundlage der Klassifikation der Pixel des weiteren Untersuchungsbereichs im mindestens einen weiteren digitalen Schichtbild erzeugt wird.

6. Verfahren zum Visualisieren mindestens einer in einem Organ (10) vorliegenden Gewebeeigenschaft, wobei das Verfahren ein Erzeugen einer oder mehrerer Ansicht/en (100) zumindest eines Teils des Organs durch Kombinieren

   - eines aus mindestens einem digitalen Schichtbild (1) generierten dreidimensionalen Flächenmodells zumindest des Teils des Organs mit
   - mindestens einem mittels eines weiteren bildgebenden Verfahrens erhaltenen Bild (130) zumindest des Teils des Organs

   umfasst und wobei in der Ansicht bzw. in mindestens einer der Ansichten die mindestens eine Gewebeeigenschaft zumindest in dem Teil des Organs (10) auf Grundlage mindestens einer Klassifikation von Pixeln im digitalen Schichtbild gekennzeichnet wird.

7. Vorrichtung (200) zum Visualisieren mindestens einer in einem Organ (10) vorliegenden Gewebeeigenschaft, wobei die Vorrichtung dazu eingerichtet ist,

   - für einen Referenzbereich (11) in einem digitalen Schichtbild vom Organ automatisch oder teilautomatisch einen Referenzmittelwert als mittleren Pixelwert im Referenzbereich zu bestimmen;
   - in einem Untersuchungsbereich (12, 22, 32) im digitalen Schichtbild enthaltene Pixel ($p_1$, $p_2$) automatisch oder teilautomatisch gemäß einer jeweiligen Abweichung ihres jeweiligen Pixelwertes vom Referenzmittelwert zu klassifizieren und
   - eine oder mehrere Ansicht/en (100) mindestens eines Teils des Organs zu erzeugen, wobei die Ansicht bzw. mindestens eine der Ansichten auf Grundlage der Klassifikation erzeugt wird.

8. Vorrichtung nach Anspruch 7, wobei die Ansicht bzw. mindestens eine der Ansichten

   - auch auf Grundlage eines mittels eines weiteren bildgebenden Verfahrens erhaltenen Bildes (130) des Organs erzeugt wird und/oder
   - ein dreidimensionales Flächenmodell (120) mindestens eines Teils des Organs umfasst, wobei das dreidimensionale Flächenmodell auf Grundlage der Klassifikationen eingefärbte Oberflächensegmente ($O_1$, $O_2$, $O_3$, $O_4$) aufweist.

9. Vorrichtung gemäß einem der Ansprüche 7 oder 8, wobei eine beim Klassifizieren verwendete Klasseneinteilung auf ganzzahligen Vielfachen einer Referenzstandardabweichung als Standardabweichung von Pixelwerten des Referenzbereichs von dem Referenzmittelwert beruht.

10. Vorrichtung gemäß einem der Ansprüche 7 bis 9, die zudem dazu eingerichtet ist, Pixel, die in einem jeweiligen zweiten und/oder einem jeweiligen weiteren Untersuchungsbereich (32) in mindestens einem zweiten bzw. weiteren digitalen Schichtbild vom Organ enthalten sind, automatisch oder teilautomatisch gemäß einer jeweiligen Abweichung ihres jeweiligen Pixelwertes vom Referenzmittelwert bzw. von einem weiteren Referenzmittelwert zu klassifizieren,
   und wobei die Ansicht bzw. mindestens eine der Ansichten auf Grundlage der klassifizierten Pixel des weiteren Untersuchungsbereichs im mindestens einen zweiten bzw. weiteren digitalen Schichtbild erzeugt wird.

11. Vorrichtung zum Visualisieren mindestens einer in einem Organ (10) vorliegenden Gewebeeigenschaft, wobei die Vorrichtung dazu eingerichtet ist, eine oder mehrere Ansicht/en (100) zumindest des Teils des Organs zu erzeugen, wobei das Erzeugen ein Kombinieren

   - eines aus mindestens einem digitalen Schichtbild (1) generierten dreidimensionalen Flächenmodells zumindest eines Teils des Organs mit
   - mindestens einem mittels eines weiteren bildgebenden Verfahrens erhaltenen Bild (130) zumindest des Teils des Organs

   umfasst und wobei in der Ansicht bzw. in mindestens einer der Ansichten die Gewebeeigenschaft zumindest in dem Teil des Organs (10) auf Grundlage einer Klassifikation von Pixeln im digitalen Schichtbild gekennzeichnet ist.

12. Speichermedium mit darauf gespeicherten Instruktionen, die, wenn sie auf einer Rechnereinheit (210) ausgeführt werden, bewirken, dass die Rechnereinheit

   - für einen Referenzbereich (11) in einem digitalen Schichtbild (1) eines Organs (10) automatisch oder teilautomatisch einen Referenzmittelwert als mittleren Pixelwert im Referenzbereich bestimmt;
   - in einem Untersuchungsbereich (12, 22, 32) im digitalen Schichtbild (1) enthaltene Pixel automatisch gemäß einer jeweiligen Abweichung ihres jeweiligen Pixelwertes vom Referenzmittelwert klassifiziert und
   - eine oder mehrere Ansicht/en (100) zumindest eines Teils des Organs erzeugt, wobei die Ansicht bzw. mindestens eine der Ansichten auf Grundlage der Klassifikation erzeugt wird.

13. Speichermedium gemäß Anspruch 12, wobei die Ansicht bzw. mindestens eine der Ansichten

   - auch auf Grundlage eines mittels eines weiteren bildgebenden Verfahrens erhaltenen Bildes (130) des Organs erzeugt wird und/oder
   - ein dreidimensionales Flächenmodell (120) des Teils bzw. zumindest eines Teils des Organs (10) umfasst, wobei das dreidimensionale Flächenmodell auf Grundlage der Klassifikationen eingefärbte Oberflächensegmente ($O_1$, $O_2$, $O_3$, $O_4$) aufweist.

14. Speichermedium gemäß einem der Ansprüche 12 oder 13, wobei die Instruktionen, wenn sie auf der Rechnereinheit ausgeführt werden, zudem bewirken, dass die Rechnereinheit Pixel, die in einem jeweiligen zweiten und/oder einem jeweiligen weiteren Untersuchungsbereich (32) in mindestens einem zweiten bzw. weiteren digitalen Schichtbild vom Organ enthalten sind, automatisch oder teilautomatisch gemäß einer jeweiligen Abweichung ihres jeweiligen Pixelwertes vom Referenzmittelwert bzw. von einem weiteren Referenzmittelwert klassifiziert und dass sie die Ansicht bzw. mindestens eine der Ansichten auf Grundlage der klassifizierten Pixel des weiteren Untersuchungsbereichs im mindestens einen zweiten bzw. weiteren digitalen Schichtbild erzeugt.

15. Speichermedium gemäß einem der Ansprüche 12 bis 14, wobei eine beim Klassifizieren verwendete Klasseneinteilung auf ganzzahligen Vielfachen einer Referenzstandardabweichung als Standardabweichung von Pixelwerten des Referenzbereichs von dem Referenzmittelwert beruht.

16. Speichermedium mit darauf gespeicherten Instruktionen, die, wenn sie auf einer Rechnereinheit (210) ausgeführt werden, bewirken, dass die Rechnereinheit eine oder mehrerer Ansicht/en (100) zumindest des Teils des Organs erzeugt, wobei das Erzeugen ein Kombinieren

    - eines aus mindestens einem digitalen Schichtbild (1) generierten dreidimensionalen Flächenmodells zumindest eines Teils des Organs mit
    - mindestens einem mittels eines weiteren bildgebenden Verfahrens erhaltenen Bild (130) zumindest des Teils des Organs

umfasst und wobei in der Ansicht bzw. in mindestens einer der Ansichten mindestens eine Gewebeeigenschaft zumindest in dem Teil des Organs (10) auf Grundlage einer Klassifikation von Pixeln im digitalen Schichtbild gekennzeichnet wird.

**Geänderte Patentansprüche gemäss Regel 137(2) EPÜ.**

1. Verfahren zum Visualisieren mindestens einer in einem Organ (10) vorliegenden Gewebeeigenschaft, wobei das Verfahren umfasst:

    - Festlegen eines Referenzbereiches (11) in einem digitalen Schichtbild (1) des Organs;
    - Bestimmen eines Referenzmittelwertes als mittleren Pixelwert im Referenzbereich (11);
    - Abgrenzen eines Untersuchungsbereichs (12, 22, 32) in dem digitalen Schichtbild (1);
    - Klassifizieren von Pixeln des Untersuchungsbereichs gemäß einer jeweiligen Abweichung ihres jeweiligen Pixelwertes vom Referenzmittelwert; und
    - Erzeugen einer oder mehrerer Ansicht/en (100) mindestens eines Teils des Organs,

wobei die Ansicht bzw. mindestens eine der Ansichten auf Grundlage der Klassifikation sowie eines den Teil des Organs darstellenden Bildes (130) erzeugt wird, während dieses mittels eines anderen bildgebenden Verfahrens erzeugt wird.

2. Verfahren nach Anspruch 1, wobei die Ansicht bzw. mindestens eine der Ansichten ein dreidimensionales Flächenmodell (120) mindestens eines Teils des Organs umfasst, wobei das dreidimensionale Flächenmodell auf Grundlage der Klassifikation gekennzeichnete Oberflächensegmente ($O_1$, $O_2$, $O_3$, $O_4$) aufweist.

3. Verfahren gemäß einem der Ansprüche 1 oder 2, wobei eine beim Klassifizieren verwendete Klasseneinteilung auf ganzzahligen Vielfachen einer Referenzstandardabweichung als Standardabweichung von Pixelwerten des Referenzbereichs (11) vom Referenzmittelwert beruht.

4. Verfahren gemäß einem der vorhergehenden Ansprüche, das zudem umfasst:

    - Abgrenzen eines zweiten Untersuchungsbereichs (12, 22, 32) in mindestens einem zweiten digitalen Schichtbild des Organs; und
    - Klassifizieren von Pixeln des zweiten Untersuchungsbereichs gemäß einer jeweiligen Abweichung ihres jeweiligen Pixelwertes vom Referenzmittelwert;

wobei die Ansicht bzw. mindestens eine der Ansichten auf Grundlage der Klassifikation der Pixel des zweiten Untersuchungsbereichs im mindestens einen zweiten digitalen Schichtbild erzeugt wird.

5. Verfahren gemäß einem der vorhergehenden Ansprüche, das zudem umfasst:

    - Festlegen eines weiteren Referenzbereiches in mindestens einem weiteren digitalen Schichtbild des Organs;
    - Bestimmen eines weiteren Referenzmittelwertes als mittleren Pixelwert im weiteren Referenzbereich;
    - Abgrenzen eines jeweiligen weiteren Untersuchungsbereichs in dem mindestens einen weiteren digitalen Schichtbild; und
    - Klassifizieren von Pixeln des weiteren Untersuchungsbereichs gemäß einer jeweiligen Abweichung ihres jeweiligen Pixelwertes vom weiteren Referenzmittelwert;

wobei die Ansicht bzw. mindestens eine der Ansichten auf Grundlage der Klassifikation der Pixel des weiteren Untersuchungsbereichs im mindestens einen weiteren digitalen Schichtbild erzeugt wird.

**6.** Verfahren zum Visualisieren mindestens einer in einem Organ (10) vorliegenden Gewebeeigenschaft, wobei das Verfahren ein Erzeugen einer oder mehrerer Ansicht/en (100) zumindest eines Teils des Organs durch Kombinieren

> - eines aus mindestens einem digitalen Schichtbild (1) generierten dreidimensionalen Flächenmodells zumindest des Teils des Organs mit
> - mindestens einem mittels eines weiteren bildgebenden Verfahrens erhaltenen Bild (130) zumindest des Teils des Organs

während eines Erzeugens des Bildes (130) mittels des weiteren bildgebenden Verfahrens umfasst und wobei in der Ansicht bzw. in mindestens einer der Ansichten die mindestens eine Gewebeeigenschaft zumindest in dem Teil des Organs (10) auf Grundlage mindestens einer Klassifikation von Pixeln im digitalen Schichtbild gekennzeichnet wird.

**7.** Vorrichtung (200) zum Visualisieren mindestens einer in einem Organ (10) vorliegenden Gewebeeigenschaft, wobei die Vorrichtung dazu eingerichtet ist,

> - für einen Referenzbereich (11) in einem digitalen Schichtbild vom Organ automatisch oder teilautomatisch einen Referenzmittelwert als mittleren Pixelwert im Referenzbereich zu bestimmen;
> - in einem Untersuchungsbereich (12, 22, 32) im digitalen Schichtbild enthaltene Pixel ($p_1$, $p_2$) automatisch oder teilautomatisch gemäß einer jeweiligen Abweichung ihres jeweiligen Pixelwertes vom Referenzmittelwert zu klassifizieren und
> - eine oder mehrere Ansicht/en (100) mindestens eines Teils des Organs zu erzeugen,

wobei die Ansicht bzw. mindestens eine der Ansichten auf Grundlage der Klassifikation sowie eines den Teil des Organs darstellenden Bildes (130) erzeugt wird, während dieses mittels eines weiteren bildgebenden Verfahrens erzeugt wird.

**8.** Vorrichtung nach Anspruch 7, wobei die Ansicht bzw. mindestens eine der Ansichten ein dreidimensionales Flächenmodell (120) mindestens eines Teils des Organs umfasst, wobei das dreidimensionale Flächenmodell auf Grundlage der Klassifikationen eingefärbte Oberflächensegmente ($O_1$, $O_2$, $O_3$, $O_4$) aufweist.

**9.** Vorrichtung gemäß einem der Ansprüche 7 oder 8, wobei eine beim Klassifizieren verwendete Klasseneinteilung auf ganzzahligen Vielfachen einer Referenzstandardabweichung als Standardabweichung von Pixelwerten des Referenzbereichs von dem Referenzmittelwert beruht.

**10.** Vorrichtung gemäß einem der Ansprüche 7 bis 9, die zudem dazu eingerichtet ist, Pixel, die in einem jeweiligen zweiten und/oder einem jeweiligen weiteren Untersuchungsbereich (32) in mindestens einem zweiten bzw. weiteren digitalen Schichtbild vom Organ enthalten sind, automatisch oder teilautomatisch gemäß einer jeweiligen Abweichung ihres jeweiligen Pixelwertes vom Referenzmittelwert bzw. von einem weiteren Referenzmittelwert zu klassifizieren, und wobei die Ansicht bzw. mindestens eine der Ansichten auf Grundlage der klassifizierten Pixel des weiteren Untersuchungsbereichs im mindestens einen zweiten bzw. weiteren digitalen Schichtbild erzeugt wird.

**11.** Vorrichtung zum Visualisieren mindestens einer in einem Organ (10) vorliegenden Gewebeeigenschaft, wobei die Vorrichtung dazu eingerichtet ist, eine oder mehrere Ansicht/en (100) zumindest eines Teils des Organs zu erzeugen, wobei das Erzeugen ein Kombinieren

> - eines aus mindestens einem digitalen Schichtbild (1) generierten dreidimensionalen Flächenmodells zumindest eines Teils des Organs mit
> - mindestens einem mittels eines weiteren bildgebenden Verfahrens erhaltenen Bild (130) zumindest des Teils des Organs

während eines Erzeugens des Bildes (130) mittels des weiteren bildgebenden Verfahrens umfasst und wobei in der Ansicht bzw. in mindestens einer der Ansichten die Gewebeeigenschaft zumindest in dem Teil des Organs (10) auf Grundlage einer Klassifikation von Pixeln im digitalen Schichtbild gekennzeichnet ist.

**12.** Speichermedium mit darauf gespeicherten Instruktionen, die, wenn sie auf einer Rechnereinheit (210) ausgeführt werden, bewirken, dass die Rechnereinheit

> - für einen Referenzbereich (11) in einem digitalen Schichtbild (1) eines Organs (10) automatisch oder teilautomatisch einen Referenzmittelwert als mittleren Pixelwert im Referenzbereich bestimmt;
> - in einem Untersuchungsbereich (12, 22, 32) im digitalen Schichtbild (1) enthaltene Pixel automatisch gemäß einer jeweiligen Abweichung ihres jeweiligen Pixelwertes vom Referenzmittelwert klassifiziert und

- eine oder mehrere Ansicht/en (100) zumindest eines Teils des Organs erzeugt, wobei die Ansicht bzw. mindestens eine der Ansichten auf Grundlage der Klassifikation sowie eines den Teil des Organs darstellenden Bildes (130) erzeugt wird, während dieses mittels eines anderen bildgebenden Verfahrens erzeugt wird.

13. Speichermedium gemäß Anspruch 12, wobei die Ansicht bzw. mindestens eine der Ansichten ein dreidimensionales Flächenmodell (120) des Teils bzw. zumindest eines Teils des Organs (10) umfasst, wobei das dreidimensionale Flächenmodell auf Grundlage der Klassifikationen eingefärbte Oberflächensegmente ($O_1$, $O_2$, $O_3$, $O_4$) aufweist.

14. Speichermedium gemäß einem der Ansprüche 12 oder 13, wobei die Instruktionen, wenn sie auf der Rechnereinheit ausgeführt werden, zudem bewirken, dass die Rechnereinheit Pixel, die in einem jeweiligen zweiten und/oder einem jeweiligen weiteren Untersuchungsbereich (32) in mindestens einem zweiten bzw. weiteren digitalen Schichtbild vom Organ enthalten sind, automatisch oder teilautomatisch gemäß einer jeweiligen Abweichung ihres jeweiligen Pixelwertes vom Referenzmittelwert bzw. von einem weiteren Referenzmittelwert klassifiziert und dass sie die Ansicht bzw. mindestens eine der Ansichten auf Grundlage der klassifizierten Pixel des weiteren Untersuchungsbereichs im mindestens einen zweiten bzw. weiteren digitalen Schichtbild erzeugt.

15. Speichermedium gemäß einem der Ansprüche 12 bis 14, wobei eine beim Klassifizieren verwendete Klasseneinteilung auf ganzzahligen Vielfachen einer Referenzstandardabweichung als Standardabweichung von Pixelwerten des Referenzbereichs von dem Referenzmittelwert beruht.

16. Speichermedium mit darauf gespeicherten Instruktionen, die, wenn sie auf einer Rechnereinheit (210) ausgeführt werden, bewirken, dass die Rechnereinheit eine oder mehrerer Ansicht/en (100) zumindest des Teils des Organs erzeugt, wobei das Erzeugen ein Kombinieren

- eines aus mindestens einem digitalen Schichtbild (1) generierten dreidimensionalen Flächenmodells zumindest eines Teils des Organs mit
- mindestens einem mittels eines weiteren bildgebenden Verfahrens erhaltenen Bild (130) zumindest des Teils des Organs

während eines Erzeugens des Bildes (130) mittels des weiteren bildgebenden Verfahrens umfasst

und wobei in der Ansicht bzw. in mindestens einer der Ansichten mindestens eine Gewebeeigenschaft zumindest in dem Teil des Organs (10) auf Grundlage einer Klassifikation von Pixeln im digitalen Schichtbild gekennzeichnet wird.

Fig. 1a

11a   11   12a   12   10

1

12b

Fig. 1b

12   10   1

p₁   p₂

Fig. 2

Fig. 3

200

EUROPÄISCHER RECHERCHENBERICHT

Europäisches Patentamt
European Patent Office
Office européen des brevets

**Nummer der Anmeldung**

EP 18 19 9400

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | STADLBAUER A ET AL: "Improved delineation of brain tumors: an automated method for segmentation based on pathologic changes of ^1H-MRSI metabolites in gliomas", NEUROI, ELSEVIER, AMSTERDAM, NL, Bd. 23, Nr. 2, 1. Oktober 2004 (2004-10-01), Seiten 454-461, XP004616725, ISSN: 1053-8119, DOI: 10.1016/J.NEUROIMAGE.2004.06.022 * Abbildungen 2-4 * * Seite 456, Spalte 2, Zeilen 3-6 * * Seite 456, Spalte 2, letzten 3 Zeilen * ----- | 1-16 | INV. G06T7/00 G06T7/11 G06T7/136 |
| X | DE WINTER S A ET AL: "Computer assisted three-dimensional plaque characterization in intracoronary ultrasound studies", COMPUTERS IN CARDIOLOGY 2003. THESSALONIKI, GREECE, SEPT. 21 - 24, 2003; [COMPUTERS IN CARDIOLOGY], NEW YORK, NY : IEEE, US, Bd. VOL. 30, 21. September 2003 (2003-09-21), Seiten 73-76, XP010698774, ISBN: 978-0-7803-8170-4 * Abbildungen 4-5 * * Abschnitt 2.1 * * Abschnitt 2.2; Abbildung 2 * * Abschnitt 3 * ----- -/-- | 1-16 | |

RECHERCHIERTE SACHGEBIETE (IPC)

G06T

Der vorliegende Recherchenbericht wurde für alle Patentansprüche erstellt

| Recherchenort | Abschlußdatum der Recherche | Prüfer |
|---|---|---|
| München | 17. Januar 2019 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                 
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 18 19 9400

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YAN ANDREW T ET AL: "Characterization of the peri-infarct zone by contrast-enhanced cardiac magnetic resonance imaging is a powerful predictor of post-myocardial infarction mortality", CIRCULATION, AMERICAN HEART ASSOCIATION, INC, US, Bd. 114, Nr. 1, 4. Juli 2006 (2006-07-04), Seiten 32-39, XP002593498, ISSN: 1524-4539, DOI: 10.1161/CIRCULATIONAHA.106.613414 [gefunden am 2006-06-26] * Abbildungen 1, 3 * * Seite 33, Spalte 2, Zeilen 13-22 * ----- | 1-16 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 17. Januar 2019 | Kollreider, Klaus |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
  Dokument

EPO FORM 1503 03.82 (P04C03)

Seite 2 von 2

**IN DER BESCHREIBUNG AUFGEFÜHRTE DOKUMENTE**

**In der Beschreibung aufgeführte Patentdokumente**

- EP 2784748 A1

**In der Beschreibung aufgeführte Nicht-Patentliteratur**

- **S. NEDIOS ; PH. SOMMER ; A. BOLLMANN ; G. HINDRICKS.** Advanced Mapping Systems To Guide Atrial Fibrillation Ablation: Electrical Information That Matters. *JAFIB Journal Review,* April 2018, vol. 8 (6